(19) Europäisches Patentamt

European Patent Office

Office européen des brevets

(11) **EP 1 452 552 A2**

(12) **EUROPÄISCHE PATENTANMELDUNG**

(43) Veröffentlichungstag:
**01.09.2004 Patentblatt 2004/36**

(51) Int Cl.[7]: **C08F 251/00**, C08L 51/02

(21) Anmeldenummer: **04003355.7**

(22) Anmeldetag: **14.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **28.02.2003 DE 10308753**

(71) Anmelder: **Bayer Chemicals AG
51368 Leverkusen (DE)**

(72) Erfinder:
- **Hauschel, Bernd, Dr.
51373 Leverkusen (DE)**
- **Thiele, Bernd
51519 Odenthal (DE)**
- **Hübbe, Thomas
51069 Köln (DE)**
- **Jansen, Bernhard, Dr.
51061 Köln (DE)**

(54) **Kationische Stärke-Pfropfcopolymere**

(57) Kationisches Stärke-Pfropfcopolymer aufgebaut aus den Monomeren a) bis d)

a) 20 - 80 Gew.-% Acrylamid, Methacrylamid oder Mischungen davon,
b) 3 - 20 Gew.-% wenigstens eines basischen oder kationischen Vinylmonomers,
c) 0,005 -1,5 Gew.-% wenigstens eines bi- oder höherfunktionellen Vernetzers,
d) 0 - 10 Gew.-% wenigstens eines nichtionischen oder anionischen Vinylmonomers, das sich von den unter a) bis c) aufgeführten Monomeren unterscheidet

und einer Pfropfgrundlage e)
e) 15 -70 Gew.-% wenigstens einer Stärke oder eines Stärkederivats,

wobei die Summe aus a) bis e) 100 Gew.-% beträgt.

EP 1 452 552 A2

**Beschreibung**

Die vorliegende Erfindung betrifft kationische Stärke-Pfropfcopolymere, die zur Steigerung der Trockenfestigkeit von Papier geeignet sind, ihre Verwendung sowie ihre Herstellung.

Unter der Trockenfestigkeit von Papier summiert man verschiedene Festigkeitsparameter, die am trockenen Papier ermittelt werden, wie Trockenbruchlast, Berstfestigkeit, Spaltfestigkeit bzw. Festigkeit in z-Richtung, Steifigkeit, Knickbeständigkeit und Oberflächenfestigkeit (vgl. "Dry Strength Additives", Ed. W. F. Reynolds, TAPPI Press 1980, Atlanta). Zur Steigerung der Trockenfestigkeit können dem Papier bestimmte Additive zugesetzt werden. Die Trockenfestigkeit wird neben der Eigenfestigkeit der Cellulosefasern selbst in erster Linie durch Wasserstoffbrückenbindungen innerhalb des Papierblatts bestimmt. Daher haben sich polymere, hydrophile Additive bewährt, die mit den Cellulosefasern Wasserstoffbrückenbindungen bilden und so die Kontaktfläche zwischen den Cellulosefasern erhöhen können. Typische Beispiele hierfür sind Stärke, Galaktomannane, Polyacrylamide, Carboxymethylcellulose und Polyvinylalkohol.

Additive zur Steigerung der Trockenfestigkeit, d.h. Trockenverfestiger, können zur Papiermasse zugesetzt und/oder auf die Oberfläche des Papiers aufgetragen werden. Für den Masseeinsatz werden entweder kationische, selbstretentierende Polymere eingesetzt, oder man verwendet anionische oder amphotere Polymere in Kombination mit einem kationischen Fixiermittel. Beim Oberflächeneinsatz spielt die Ladung für die Fixierung keine Rolle, so dass hier auch praktisch ungeladene Polymere wie Polyvinylalkohol einsetzbar sind. Stärken und Galaktomannane, die als Trockenverfestiger in der Masse eingesetzt werden, sind üblicherweise kationisch modifiziert. Polyacrylamide kommen in anionischer, amphoterer oder kationischer Form zum Einsatz, wobei amphotere bzw. anionische Polyacrylamide beim Masseeinsatz üblicherweise mit einem Fixiermittel kombiniert werden, um gute Retention im Papier zu erreichen.

In US 4 400 496 werden Pfropfpolymere auf Basis von Stärke und Acrylamid beschrieben, wobei Stärke als Pfropfgrundlage dient und die Pfropfäste entweder nur aus Acrylamid bestehen, d.h. nichtionisch sind oder aus Acrylamid und Acrylsäure aufgebaut sind, d.h. anionisch sind. Solche Produkte müssen, wenn man sie als Trockenverfestiger der Papiermasse zusetzt, mit einem Fixiermittel kombiniert werden, um eine hinreichende Retention zu gewährleisten. EP-A 194 987 beschreibt kationische Stärkepfropfpolymere als Papiertrockenverfestiger, wobei Stärke als Pfropfgrundlage verwendet wird und die Pfropfäste aus kationischen Polyacrylamid-Fragmenten bestehen. Dies wird dadurch erreicht, dass Acrylamid gemeinsam mit einem kationischen Vinylmonomer aufgepfropft wird. Die beschriebenen Produkte können ohne Fixiermittel in der Papiermasse angewendet werden, da sie durch die kationische Ladung hinreichende Eigenretention aufweisen. Dabei wird eine signifikante Steigerung der Trockenbruchlast erreicht.

Es wurde nun überraschenderweise gefunden, dass sich kationische Stärkepfropfpolymere, deren Pfropfäste vorzugsweise überwiegend aus Acrylamid und/oder Methacrylamid bestehen, in ihrer Wirkung als Trockenverfestiger noch verbessern lassen, wenn während der Pfropfpolymerisation von Acrylamid bzw. Methacrylamid, kationischem Vinylmonomer und ggf. weiteren monofunktionellen Vinylmonomeren Vernetzer mit einer Funktionalität von 2 oder höher mit eingesetzt werden.

Die vorliegende Erfindung betrifft daher kationische Stärkepfropfpolymere aus den Monomeren a) bis d)

a) 20 - 80 Gew.-% Acrylamid, Methacrylamid oder Mischungen davon,
b) 3-20 Gew.-% wenigstens eines basischen oder kationischen Vinylmonomers,
c) 0,005 -1,5 Gew.-% wenigstens eines bi- oder höherfunktionellen Vernetzers,
d) 0-10 Gew.-% wenigstens eines nichtionischen oder anionischen Vinylmonomers, das sich von den unter a) bis c) aufgeführten Monomeren unterscheidet
und einer Pfropfgrundlage e)
e) 15 -70 Gew.-% wenigstens einer Stärke oder eines Stärkederivats,

wobei die Summe aus a) bis e) 100 Gew.-% beträgt.

Die erfindungsgemäßen Stärkepfropfpolymere sind erhältlich durch radikalische Polymerisation der Monomeren a) bis d) in Gegenwart der Pfropfgrundlage e).

Als unter a) genannte Monomere kommen Acrylamid, Methacrylamid und beliebige Mischungen dieser beiden Monomere in Frage. Bevorzugt wird reines Acrylamid eingesetzt.

Als unter b) genannte Monomere kommen Vinylverbindungen mit einer radikalisch polymerisierbaren Doppelbindung in Frage, die entweder eine permanent kationische Ladung z.B. in Form einer Ammoniumgruppe tragen, oder eine basische Gruppe enthalten, die bereits unter schwach sauren (pH 2,5 - 6) Bedingungen zumindest teilweise protoniert vorliegt. Beispielsweise können N,N-Dialkylaminoalkylacrylate bzw. -methacrylate oder N,N-Dialkylaminoalkylacrylamide bzw. -methacrylamide sowie deren jeweilige Quaternisierungsprodukte eingesetzt werden. Konkrete Beispiele hierfür sind N,N-Dimethylaminoethylacrylat, N,N-Dimethylaminoethylmethacrylat, N,N-Diethylaminoethylacrylat, N,N-Diethylaminoethylmethacrylat, N,N-Dimethylaminopropylacrylamid, N,N-Dimethylaminopropylmethacrylamid sowie die entsprechenden quaternären Ammoniumsalze, die sich aus den eben genannten Verbindungen z.B. durch Umsetzung mit gebräuchlichen Quaternisierungsreagenzien wie Methylchlorid, Dimethylsulfat, Epichlorhydrin oder Benzylchlorid herstellen lassen, wie beispielsweise 2-(Acryloyloxy)ethyltrimethylammoniumchlorid, 2-(Methacryloyloxy)ethyltrimethylammoniumchlorid, 3-(Acrylamido)-propyltrimethylammoniumchlorid, 3-(Methacrylamidopropyl)trimethylammoniumchlorid, 2-(Acryloyloxy)ethylbenzyldimethylammoniumchlorid und 2-(Methacryloyloxy) ethylbenzyldimethylammoniumchlorid. Weitere Beispiele für geeignete unter b) genannte Monomere sind Vinylpyridin und Diallyldimethylammoniumchlorid. Bevorzugt werden permanent kationische Monomere eingesetzt. Besonders bevorzugt sind hierbei 2-(Acryloyloxy)ethyltrimethylammoniumchlorid, 2-(Methacryloyloxy)ethyltrimethylammoniumchlorid und Diallyldimethylammoniumchlorid.

Als unter c) genannte Monomere kommen z.B. solche mit einer Wasserlöslichkeit von mindestens 3 g/l bei 23°C in Frage, beispielsweise Divinylverbindungen wie N,N'-Methylenbisacrylamid, Ethylenglykoldiacrylat sowie -methacrylat. Bevorzugt wird N,N'-Methylenbisacrylamid eingesetzt.

Als unter d) genannte Monomere kommen nichtionische bzw. anionische Vinylverbindungen in Frage, wie z. B. Styrol, Acrylsäureester, Methacrylsäureester, Acrylnitril, Methacrylnitril, Vinylacetat, Vinylpropionat, N-Vinylformamid, Hydroxyethylacrylat bzw. -methacrylat, weiterhin Ester aus Acrylsäure bzw. Methacrylsäure, die durch Umsetzung mit mindestens 2 Äquivalenten Ethylenoxid erhalten werden können, sowie Acrylsäure, Methacrylsäure, Itaconsäure, Maleinsäureanhydrid, Vinylsulfonsäure und Styrolsulfonsäure. Bevorzugt beträgt der Anteil der unter d) genannten Monomere jedoch < 3 Gew.%, bezogen auf die Summe aus a) bis e).

Wird ein anionisches unter d) aufgeführtes Monomer verwendet, so wird seine Menge im Verhältnis zum Anteil des kationischen Monomeren unter b) so gewählt, dass maximal 0,66 Mol anionisches Monomer bezogen auf 1 Mol kationisches Monomer eingesetzt werden. Dadurch erhält man ausschließlich Produkte mit kationischer Überschussladung.

Als unter e) genannte Stärken kommen vorzugsweise solche auf Basis von Kartoffel-, Reis-, Weizen-, Maisoder Tapiokastärke in Betracht. Üblicherweise werden keine nativen Stärken eingesetzt, sondern bevorzugt solche, die in ihrem Molgewicht durch teilweisen Abbau bereits reduziert sind und/oder durch Derivatisierung gewonnen wurden. Es kommen weiterhin Stärken in Frage, bei denen beide Modifizierungsschritte kombiniert wurden, d.h. die teilweise abgebaut und zusätzlich derivatisiert sind. Typische Methoden zum Stärkeabbau sind z.B. enzymatische, oxidative, thermische oder auch hydrolytische Behandlung. Beispiele für geeignete Stärkederivate sind Hydroxyethylstärke oder kationische Stärke. Unter kationischer Stärke versteht man i. a. Stärkeether, die quaternäre Ammoniumgruppen enthalten. Bevorzugt im Sinne der vorliegenden Erfindung sind Hydroxyethylstärke und kationische Stärke, besonders bevorzugt sind vorabgebaute, kationische Stärken, jeweils mit einem Substitutionsgrad DS > 0,01.

Die Polymerisation wird üblicherweise im wässrigen Medium im neutralen bis sauren pH-Bereich durchgeführt, vorzugsweise im pH-Bereich 2,5 - 6. Der pH-Wert kann dabei vor Beginn der Polymerisation durch Zusatz von geringen Mengen an Mineralsäuren oder organischer Säuren, wie z.B. Salzsäure, Schwefelsäure, Phosphorsäure, Ameisensäure oder Essigsäure, auf einen geeigneten Wert eingestellt werden. Die Stärke wird in der Regel vollständig in wässriger Suspension bzw. Lösung vorgelegt und die anderen Monomere entweder im Batch- oder im Zulaufverfahren zugegeben und durch geeignete Initiatoren in einer radikalischen Polymerisation umgesetzt. In der EP-A 194 987 ist als ein typisches Verfahren beschrieben, dass verkleisterte Stärke, nichtionisches und kationisches Monomer als Mischung vorgelegt und die Polymerisation durch Zugabe eines Initiators gestartet und durchgeführt wird.

Die Erfindung betrifft daher auch ein Verfahren zur Herstellung des erfmdungsgemäßen Stärkepfropfpolymers, das dadurch gekennzeichnet ist, dass man die Komponenten a) bis e) in Wasser in Gegenwart von radikalischen Initiatoren radikalisch polymerisiert.

Die Erfindung betrifft weiterhin ein Verfahren zur Herstellung eines kationischen Stärkepfropfpolymers, dadurch gekennzeichnet, dass man die Monomeren a) bis d)

a) 20 - 80 Gew.-% Acrylamid, Methacrylamid oder Mischungen daraus
b) 3-20 Gew.-% mindestens eines basischen oder kationischen Vinylmonomers
c) 0 - 1,5 Gew.-% mindestens eines bi- oder höherfunktionellen Vernetzers
d) 0-10 Gew.-% mindestens eines nichtionischen oder anionischen Vinylmonomers, das sich von den unter a) bis c) aufgeführten Monomeren unterscheidet
in Gegenwart von
e) 15-70 Gew.-% mindestens einer Stärke oder eines Stärkederivats

radikalisch polymerisiert, dadurch gekennzeichnet, dass in einem ersten Schritt als Pfropfgrundlage die Komponente e) in Wasser mit wenigstens 30 Gew.-% der Gesamtmenge der Komponente b) radikalisch polymerisiert wird und anschließend in einem zweiten Schritt die übrigen Komponenten a), c), d) und die Restmenge von b) radikalisch in Gegenwart der im ersten Schritt entstandenen Reaktionsmischung polymerisiert werden, und die Summe aus a) bis e) 100 Gew.-% ergibt.

Ebenfalls Gegenstand der Erfindung sind nach diesem Verfahren erhältliche kationische Stärkepfropfpolymere.

Bevorzugt wird dieses zweistufige Verfahren so durchgeführt, dass in einem ersten Schritt das unter b) genannte Vinylmonomer durch Zugabe eines Initiators in Gegenwart der unter e) genannten Komponente radikalisch polymerisiert wird, wobei die Reaktionstemperatur wenigstens 70°C beträgt, die Polymerisationsdauer wenigstens 15 min beträgt und die Initiatormenge wenigstens 2,0 Gew.-%, bezogen auf die Gesamtmenge des unter b) genannten Monomers beträgt; und in einem zweiten Schritt die restlichen Monomere in Gegenwart der entstandenen Reaktionsmischung umgesetzt werden.

Bevorzugt wird dabei die in Wasser vorgelegte Stärke auf einen Wert oberhalb ihrer Verkleisterungstemperatur erhitzt, bevor der erste Polymerisationsschritt gestartet wird. Der übliche Temperaturbereich für beide Polymerisationsschritte beträgt 70 - 100°C. Die Temperatur kann auch höher sein, wenn in einem Druckreaktor unter Überdruck gearbeitet wird. Die übliche Polymerisationsdauer für der ersten Schritt beträgt 0,25 - 1,5 h, diejenige für den zweiten Schritt 0,5 - 4 h. Dabei können die Monomere und Initiatoren jeweils in einer oder in mehreren Portionen über die Polymerisationsdauer zugegeben werden, oder auch kontinuierlich zudosiert werden. Die Polymerisation wird in einer Inertgasatmosphäre, z. B. unter Stickstoff, durchgeführt.

Als Initiatoren für die Polymerisation werden i. a. Radikalstarter verwendet, vorzugsweise Peroxo- oder Azoverbindungen. Beispiele hierfür sind Wasserstoffperoxid, Natrium-, Kalium- und Ammoniumperoxodisulfat, Di-tert-Butylperoxid, Dibenzoylperoxid, Azoisobuttersäuredinitril, 2,2'-Azobis(2-methylbutyronitril), 2,2'-Azobis(2,4-dimethylvaleronitril) und 2,2'-Azobis(2-amidinopropan)dihydrochlorid. Bevorzugt hierunter sind Initiatoren mit einer Wasserlöslichkeit von >1 Gew.-% bei 23°C, wie z.B. Wasserstoffperoxid, Kalium- und Ammoniumperoxodisulfat.

Weiterhin kommen als Initiatoren sogenannte Redoxinitiatorsysteme in Frage, bei denen die genannten Radikalstarter zusammen mit einem Reduktionsmittel eingesetzt werden. Beispiele für geeignete Reduktionsmittel sind Natriumsulfit, Natriumpyrosulfit, Natriumhydrogensulfit, Natriumdithionit, Natriumformaldehydsulfoxylat sowie Ascorbinsäure. Darüber hinaus können die genannten Radikalstarter auch mit Schwermetallsalzen wie Cer(IV)-, Manganoder Eisen-Salzen zu einem geeigneten Redoxsystem kombiniert werden. In Frage kommen weiterhin ternäre Startersysteme, bestehend aus Radikalstarter, Reduktionsmittel und Schwermetallsalz.

Wird ein binäres Redoxsystem aus Radikalstarter und Reduktionsmittel verwendet, so wird das Reduktionsmittel vorzugsweise vor Beginn der Polymerisation vorgelegt.

Bevorzugt wird eine Radikalstartermenge von 2,0 - 4,5 Gew.-%, bezogen auf die Gesamtmenge an Monomer b), für den ersten Polymerisationsschritt verwendet.

Insgesamt werden die Reaktionsbedingungen bevorzugt so gewählt, dass wenigstens 50 Gew.-% des Monomeren b) während des ersten Polymerisationsschrittes des zweistufigen Verfahrens umgesetzt werden. Der Umsetzungsgrad am Ende des ersten Schrittes kann durch die dem Fachmann bekannten Methoden wie z.B. HPLC oder $^1$H-NMR-Spektroskopie ermittelt werden.

Während des gesamten Herstellungsprozesses wird die Reaktionsmischung üblicherweise mit geeigneten Rühr- bzw. Mischaggregaten durchmischt, so dass die zugegebenen Komponenten möglichst schnell homogen verteilt werden. Nach Abschluss der Zugabe der Monomere und des Initiators des zweiten Polymerisationsschrittes lässt man die Reaktionsmischung zur. Vervollständigung der Polymerisation üblicherweise für eine Weile nachreagieren. Bevorzugt wird im Anschluss an diese Nachreaktionszeit nochmals eine bestimmte Menge an Initiator zugesetzt, um die noch in der Reaktionsmischung befindlichen Restmonomere möglichst weitgehend zu polymerisieren. Nach einer weiteren Nachreaktionszeit kann der pH der resultierenden Polymerlösung durch Zusatz von geeigneten Basen eingestellt werden. Bevorzugt wird hierbei ein Wert im Bereich 4 - 7 eingestellt, bevorzugte Basen sind Alkalimetallhydroxide und -acetate. Weiterhin können noch Puffersubstanzen zugesetzt werden, um den pH-Wert über die Lagerzeit zu stabilisieren.

Die Konzentration der nach dem zweistufigen Verfahren hergestellten Pfropfpolymerlösungen beträgt vorzugsweise 5-25 Gew.-% und insbesondere 12 - 22 Gew.-%. Die Viskosität der resultierenden Lösungen beträgt vorzugsweise <5000 mPas, gemessen bei 23°C mittels Rotationsviskosimeter.

Zur Erhöhung der Lagerstabilität der resultierenden Polymerlösungen kann am Ende des Herstellungsprozesses ein Biozid zugesetzt werden, um einen wirksamen Schutz gegen Pilz- und Bakterienbefall zu erzielen. Vorzugsweise werden hierzu Biozide auf Basis von Isothiazolinonen bzw. Benzisothiazolinonen, oder formaldehydabspaltende Biozide zugesetzt.

Die erfindungsgemäßen kationischen Stärkepfropfpolymere sind prinzipiell zur Trockenverfestigung aller gebräuchlichen Papiere geeignet, wobei sie sowohl in der Masse eingesetzt werden können, d.h. dem Papierstoff vor der Blattbildung zugegeben werden, als auch auf die Oberfläche der Papierbahn aufgetragen werden können, z.B. mittels einer Leimpresse, Filmpresse oder durch Sprühen.

Die Mehrheit der gebräuchlichen Papierstoffsysteme bestehen aus Faserstoffen, mineralischen Füllstoffen und Wasser. Es gibt auch füllstofffreie Stoffsysteme. Als Faserstoffe kommen im Sinne der Erfindung alle gebräuchlichen Sorten in Betracht, wie gebleichte und ungebleichte, holzfreie und holzhaltige, altpapierhaltige und deinkte Stoffe. Beispiele für gebräuchliche Füllstoffe sind Kaolin, natürliches oder gefälltes CaCO$_3$, Talkum und Titandioxid.

In einer bevorzugten Ausführungsform werden die erfindungsgemäßen Polymere in der Masse eingesetzt, wobei sie aufgrund ihrer kationischen Ladung weitgehend auf die Cellulosefasern aufziehen. Die erfindungsgemäßen Polymere können sowohl bei saurer als auch bei Neutralfahrweise eingesetzt werden. Die übliche Zugabemengen (berechnet als polymerer Feststoff) betragen 0,05 - 2 Gew.-%, bezogen auf trockenen Papierstoff. Ggf. können die erfindungsgemäßen Polymere auch mit temporären oder permanenten Nassfestmitteln kombiniert werden, wodurch die Ausbildung von erhöhter Nass-.und Trockenfestigkeit erreicht wird. Die erfindungsgemäßen Polymere sind zur Kombination mit kationischen Nassfestmitteln sehr gut geeignet. Beispiele hierfür sind Harnstoff- bzw. Melamin-Formaldehydharze, Polyamin- bzw. Polyamidamin-Epichlorhydrinharze, glyoxalierte kationische Polyacrylamide, wie sie z. B. in der US-A 4 605 702 beschrieben sind, sowie hydrophilierte Polyisocyanate, wie sie z.B. in der EP-A 582 166/EP-A 944 886 beschrieben sind.

In einer weiteren bevorzugten Ausführungsform werden die erfindungsgemäßen Polymere auf die Oberfläche der Papierbahn aufgetragen, üblicherweise mittels geeigneter Auftragsaggregate wie Leimpresse oder Filmpresse. Die übliche Zugabemengen (berechnet als polymerer Feststoff) betragen 0,05 - 2 Gew.-%, bezogen auf trockenen Papierstoff. Bei dieser Applikation können die erfindungsgemäßen Polymere mit gebräuchlichen anderen Papierchemikalien, die in der Oberfläche eingesetzt werden, kombiniert werden, insbesondere mit Stärken und Oberflächenleimungsmitteln. Weniger geeignet ist die Kombination mit anionischen optischen Aufhellern, da die Aufhellerwirkung durch das kationische Polymer vermindert wird. Bei der Mitverwendung von Aufhellern werden vorzugsweise nichtionische und/oder kätionische Aufheller eingesetzt. Weiterhin können die erfindungsgemäßen Polymere auch bei der Oberflächenapplikation mit den gerade beschriebenen temporären bzw. permanenten Nassfestmitteln kombiniert werden, wenn zusätzlich zur Erhöhung der Trockenfestigkeit auch eine Nassfestigkeitserhöhung erwünscht ist.

Neben der Erhöhung der Trockenfestigkeit, d. h. der Trockenbruchlast, Berstfestigkeit, Spaltfestigkeit, Steifheit und Knickbeständigkeit, sind die erfindungsgemäßen Polymere auch sehr gut zur Verminderung von Stauben und Rupfen geeignet, was für die Verdruckbarkeit bei einer Reihe üblicher Druckverfahren von Vorteil ist. Weiterhin sind die erfindungsgemäßen Trockenfestmittel bei Masseeinsatz zur Verbesserung der Füll- und Feinstoffretention sowie zur Entwässerungsbeschleunigung geeignet. Darüber hinaus können die erfindungsgemäßen Trockenfestmittel vorteilhaft mit den synthetischen Masseleimungsmitteln Alkylketendimer (AKD) und Alkenylbemsteinsäureanhydrid (ASA) kombiniert werden, da sie die Retention dieser Produkte beim Masseeinsatz unterstützen und auch als sogenannte kationische Promoter wirken können, d. h. die Reaktion von AKD bzw. ASA mit der Cellulosefaser beschleunigen können.

Gegenüber den häufig zur Steigerung der Trockenfestigkeit eingesetzten Produkten auf Basis glyoxalierter Polyacrylamide haben die erfindungsgemäßen Trockenfestmittel den Vorteil einer deutlich erhöhten Lagerstabilität.

## Beispiele

## Herstellungsbeispiele

(alle Prozentangaben, soweit nicht anders vermerkt, sind Gew.-%)

Für alle Herstellungsbeispiele wurden im Molgewicht abgebaute, kationische Kartoffelstärken verwendet. Im Einzelnen hatten die verwendeten Stärken folgende Merkmale bezüglich Art des Molgewichtabbaus sowie Substitutionsgrad mit kationischen Gruppen:

| | Art des Abbaus | Substitutionsgrad DS |
|---|---|---|
| Stärke A | oxidativ | 0,018 |
| Stärke B | oxidativ | 0,027 |
| Stärke C | oxidativ | 0,018 |

Die Beispiele 1-6 illustrieren die Herstellung erfindungsgemäß vernetzter kationischer Stärkepfropfcopolymere. Die Beispiele 7-14 illustrieren das erfindungsgemäße zweistufige Verfahren zur Herstellung ebenfalls erfindungsgemäßer kationischer Stärkepfropfcopolymere.

## Beispiel 1

In einem 2 l-Planschliffkolben mit Mantelheizung und Rührer werden bei Raumtemperatur 1007 g demineralisiertes Wasser vorgelegt und darin 50,5 g der Stärke A (Trockengehalt. 82,2 %) unter Rühren suspendiert. Die Apparatur wird dann unter Stickstoff gesetzt. Stickstoffatmosphäre und Rühren werden für den gesamten weiteren Reaktionsablauf beibehalten.

Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 0,5 g Eisessig zugesetzt. Danach werden gleichmäßig und parallel über 90 min bei 85°C die folgenden zwei Lösungen zudosiert:

Zulauf 1): Wässrige Lösung der Monomere bestehend aus:

78,2 g Acrylamid
23,35 g 2-(Acryloyloxyethyl)trimethylammoniumchlorid als 80%ige wässrige Lösung (AETAC)
3,0 g einer 1 %igen wässrigen Lösung von N,N'-Methylenbisacrylamid (MBA)
100,0 g demineralisiertes Wasser

Zulauf 2): Wässrige Lösung des Initiators, bestehend aus:

96,9 g einer 2%igen wässrigen Lösung von Ammoniumperoxodisulfat

Nach Beendigung der Dosierungen wird für 45 min bei 85°C nachgerührt, dann werden zur Nachaktivierung 15,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.

Der pH-Wert wird mit ca. 7 g 10 %iger Natronlauge auf 7,1 gestellt, weiterhin werden 1,4 g eines Biozids (PREVENTOL® D 2, Bayer AG) zugesetzt. Schließlich wird die Polymerlösung durch ein 100 μ-Polyamid-Filtertuch filtriert.

Man erhält eine mäßig viskose, klare, homogene Polymerlösung.

## Beispiel 2

Man verfährt wie in Beispiel 1, setzt jedoch andere Mengen an vorgelegtem Wasser und N,N'-Methylenbisacrylamid ein:

| | |
|---|---|
| Vorgelegtes demineralisiertes Wasser | 995,0 g |
| 1 %ige wässrige Lösung von MBA | 15,0 g |

## Beispiel 3

Man verfährt wie in Beispiel 1, setzt jedoch 50,7 g der Stärke B (81,9 % Trockengehalt) ein.

## Beispiel 4

Man verfährt wie in Beispiel 2, setzt jedoch 50,7 g det Stärke B (81,9 % Trockengehalt) ein.

## Beispiel 5

Man verfährt wie in Beispiel 1, setzt jedoch 48,5 g der Stärke C (85,6 % Trockengehalt) ein. Abweichend von Beispiel 1 werden 1009 g demineralisiertes Wasser vorgelegt.

## Beispiel 6

Man verfährt wie in Beispiel 2, setzt jedoch 48,5 g der Stärke C (85,6% Trockengehalt) ein. Abweichend von Beispiel 2 werden 997 g demineralisiertes Wasser vorgelegt.

## Beispiel 7

In einem 2 l-Planschliffkolben mit Mantelheizung und Rührer werden bei Raumtemperatur 1031 g demineralisiertes Wasser vorgelegt und darin 49,9 g der Stärke A (Trockengehalt 83,1%) unter Rühren suspendiert. Die Apparatur wird dann unter Stickstoff gesetzt. Stickstoffatmosphäre und Rühren werden für den gesamten weiteren Reaktionsablauf beibehalten.

Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 0,5 g Eisessig und 23,4 g einer 80 %igen wässrigen Lösung von AETAC zugesetzt. Zur Initiierung der 1. Polymerisationsstufe wird gleichmäßig über 30 min bei 85°C die folgende Lösung zudosiert:

Zulauf 1): Wässrige Initiatorlösung bestehend aus:

24,2 g einer 2%igen Lösung von Ammoniumperoxodisulfat

Nach Vervollständigung von Zulauf 1 wird die 2. Polymerisationsstufe durchgeführt. Dazu werden gleichmäßig über 90 min bei 85°C die folgenden Lösungen zudosiert:

Zulauf 2): Wässrige Acrylamidlösung bestehend aus:

78,2 g Acrylamid
80,0 g demineralisiertes Wasser

Zulauf 3): Wässrige Initiatorlösung bestehend aus:

72,7 g einer 2%igen Lösung von Ammoniumperoxodisulfat

Nach Beendigung der Dosierungen wird für 45 min bei 85°C nachgerührt, dann werden zur Nachaktivierung 15,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.
Der pH-Wert wird mit ca. 7 g 10 %iger Natronlauge auf 7,1 gestellt, weiterhin werden 1,4 g des Biozids PREVENTOL® D 2 (Bayer AG) zugesetzt. Schließlich wird die Polymerlösung durch ein 100 μ-Polyamid-Filtertuch filtriert.
Man erhält eine wenig viskose, klare, homogene Polymerlösung.

### Beispiel 8

Man verfährt analog zu Beispiel 7, wählt jedoch für Zulauf 1 eine Dosierzeit von 60 min sowie für die parallelen Zuläufe 2 und 3 eine Dosierzeit von 60 min.

### Beispiel 9

Man verfährt analog zu Beispiel 7, dosiert jedoch' die Lösung von AETAC gleichmäßig und parallel zu Zulauf 1 über 30 min zu.

### Beispiel 10

Man verfährt analog zu Beispiel 7, wählt jedoch eine andere Zusammensetzung des Polymers. Im einzelnen werden abweichend von Beispiel 7 folgende Mengen eingesetzt:

| | |
|---|---|
| Stärke A (Trockengehalt 83,1 %) | 66,6 g |
| demin. Wasser (vorgelegt) | 1049 g |
| AETAC als 80%ige wässrige Lösung | 13,0 g |
| Zulauf 1 - | 20,8 g |

| Zulauf 2: | |
|---|---|
| Acrylamid | 72,65 g |
| demin. Wasser | 75,0 g |
| Zulauf 3 | 62,3 g |

### Beispiel 11

Man verfährt analog zu Beispiel 7, setzt jedoch die Stärke B ein. Abweichend von Beispiel 7 werden folgenden Mengen verwendet:

| | |
|---|---|
| Stärke B (Trockengehalt 81,9 %) | 50,7 g |
| demin. Wasser (vorgelegt) | 1030 g |

An einer nach Abschluss der 1. Polymerisationsstufe gezogenen Probe wurde mittels $^1$H-NMR ein Monomerumsatz von 62 % ermittelt.

## Beispiel 12

Man verfährt analog zu Beispiel 7, setzt jedoch die Stärke C ein. Abweichend von Beispiel 7 werden folgenden Mengen verwendet:

| | |
|---|---|
| Stärke C (Trockengehalt 85,6%) | 48,5 g |
| demin. Wasser (vorgelegt) | 1032 g |

## Beispiel 13

In einem 21-Planschliffkolben mit Mantelheizung und Rührer werden bei Raumtemperatur 826 g demineralisiertes Wasser vorgelegt und darin 101,3 g der Stärke B (Trockengehalt 81,9 %) unter Rühren suspendiert. Die Apparatur wird dann unter Stickstoff gesetzt. Stickstoffatmosphäre und Rühren werden für den gesamten weiteren Reaktionsablauf beibehalten.

Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 0,6 g Eisessig, 6,0 g einer 5 %igen wässrigen Lösung von Rongalit® C (Natriumformaldehydsulfoxylat-Dihydrat) und 46,7 g einer 80 %igen wässrigen Lösung von AETAC zugesetzt. Zur Initiierung der 1. Polymerisationsstufe wird gleichmäßig über 30 min bei 85°C die folgende Lösung zudosiert:

Zulauf 1): Wässrige Initiatorlösung bestehend aus:

48,5 g einer 2%igen Lösung von Ammoniumperoxodisulfat

Nach Vervollständigung von Zulauf 1 wird die 2. Polymerisationsstufe durchgeführt. Dazu werden gleichmäßig über 90 min bei 85°C die folgenden Lösungen zudosiert:

Zulauf 2): Wässrige Acrylamidlösung bestehend aus:

156,4 g Acrylamid
165,0 g demineralisiertes Wasser

Zulauf 3): Wässrige Initiatorlösung bestehend aus:

145,3 g einer 2 %igen Lösung von Ammoniumperoxodisulfat

Nach Beendigung der Dosierungen wird für 45 min bei 85°C nachgerührt, dann werden zur Nachaktivierung 30,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.

Der pH-Wert wird mit ca. 11 g 10%iger Natronlauge auf 7,0 gestellt, weiterhin werden 1,6 g des Biozids PREVENTOL® D 2 (Bayer AG) zugesetzt. Schließlich wird die Polymerlösung durch ein 100μ-Polyamid-Filtertuch filtriert.

Man erhält eine mäßig viskose, klare, homogene Polymerlösung.

## Beispiel 14

Man verfährt analog zu Beispiel 7, wählt jedoch eine andere Zusammensetzung des Polymers. Im einzelnen werden abweichend von Beispiel 7 folgende Mengen eingesetzt:

| demin. Wasser (vorgelegt) | 1016 g |
|---|---|
| Zulauf 2: | |
| Acrylamid | 78,2 g |
| 1 %ige wässrige Lösung von MBA | 15,0 g |
| demin. Wasser | 80,0 g |

**Beispiel 15** (Vergleichsbeispiel analog EP-A 194 987)

In einem 2 1-Planschliffkolben mit Mantelheizung und Rührer werden bei Raumtemperatur 1014 g demineralisiertes Wasser vorgelegt und darin 50,5 g der Stärke A (Trockengehalt 82,2 %) unter Rühren suspendiert. Die' Apparatur wird dann unter Stickstoff gesetzt. Stickstoffatmosphäre und Rühren werden für den gesamten weiteren Reaktionsablauf beibehalten.

Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 0,5 g Eisessig zugesetzt. Danach werden gleichmäßig und parallel über 90 min bei 85°C die folgende zwei Lösungen zudosiert:

Zulauf 1): Wässrige Lösung der Monomere bestehend aus:

78,2 g Acrylamid
23,35 g AETAC als 80 %ige wässrige Lösung (AETAC)
100,0 g demineralisiertes Wasser

Zulauf 2): Wässrige Lösung des Initiators, bestehend aus:

96,9 g einer 2 %igen wässrigen Lösung von Ammoniumperoxodisulfat

Nach Beendigung der Dosierungen wird für 45 min bei 85°C nachgerührt, dann werden zur Nachaktivierung 15,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.

Der pH-Wert wird mit ca. 7 g 10 %iger Natronlauge auf 7,1 gestellt, weiterhin werden 1,4 g des Biozids PREVENTOL® D 2 (Bayer AG) zugesetzt. Schließlich wird die Polymerlösung durch ein 100μ-Polyamid-Filtertuch filtriert.

Man erhält eine mäßig viskose, klare, homogene Polymerlösung.

Tabelle 1:

| Physikalische Parameter der Polymerlösungen der Beispiele 1-15 | | | |
|---|---|---|---|
| **Beispiel** | **Eingestellter pH-Wert** | **Trockengehalt (%)** | **Viskosität\* bei 23°C (mPas)** |
| 1 | 7,1 | 10,3 | 390 |
| 2 | 7,3 | 10,2 | 90 |
| 3 | 7,1 | 10,3 | 120 |
| 4 | 7,1 | 10,3 | 100 |
| 5 | 7,0 | 10,0 | 60 |
| 6 | 7,0 | 10,2 | 3000 |
| 7 | 7,1 | 10,0 | 20 |
| 8 | 7,0 | 10,0 | 25 |
| 9 | 7,0 | 9,9 | 20 |
| 10 | 7,1 | 10,1 | 90 |
| 11 | 7,0 | 9,9 | 10 |
| 12 | 7,0 | 9,9 | 20 |
| 13 | 7,0 | 18,1 | 260 |
| 14 | 7,0 | 10,0 | 20 |

\* : gemessen mit dem Rotationsviskosimeter Haake VT 5L (L3-Spindel)

Tabelle 1: (fortgesetzt)

| Physikalische Parameter der Polymerlösungen der Beispiele 1-15 | | | |
|---|---|---|---|
| Beispiel | Eingestellter pH-Wert | Trockengehalt (%) | Viskosität* bei 23°C (mPas) |
| 15 | 7,1 | 10,3 | 150 |

\* : gemessen mit dem Rotationsviskosimeter Haake VT 5L (L3-Spindel)

**Anwendungsbeispiele:**

(Die Mengenangaben in den folgenden Beispielen sind als Gewichtsprozente angegeben, soweit nicht anders vermerkt. Alle Mengenangaben geben den Gehalt an trockenem Polymer wieder, bezogen auf trockenes Papier).

Zu einer altpapierhaltigen Stoffsuspension mit einer Stoffdichte von ca. 5 g/l, hergestellt aus wieder aufgeschlagenem, $CaCO_3$-haltigem Kaschierkarton, wurden unter Rühren je 0,5 % bzw. 1,5 % der Polymere aus den vorangegangen Herstellungsbeispielen gegeben. Nach einer Durchmischungszeit von 2,5 Minuten wurden 0,2 % eines Retentionsmittels (RETAMINOL® E, Bayer AG) zugegeben. Nach einer weiteren Durchmischungszeit von 10 s wurden mit einem Rapid-Koethen-Laborblattbildner Blätter gebildet. Im angeschlossenen Trockner wurden diese 7 min getrocknet und anschließend über Nacht bei 23°C und 50 % relativer Luftfeuchtigkeit konditioniert. Der Aschegehalt von Laborblättern ohne Polymerzugabe, bestimmt durch Veraschung bei ca. 900°C, betrug 11 - 13 %. Die Flächengewichte der gebildeten Blätter lagen im Bereich 65 - 85 g/m².
Die so gebildeten Blättern wurden hinsichtlich der Trockenbruchlast mit einem Gerät der Fa. Frank sowie hinsichtlich der Berstfestigkeit mit einem Gerät der Fa. Lorentzen & Wettre vermessen. Aus diesen Daten wurde die relative Zunahme der Trockenbruchlast sowie der Berstfestigkeit errechnet, bezogen auf eine Vergleichsprobe ohne Zusatz eines entsprechenden Trockenverfestigungsmittel. Zur Berechnung wurde folgende Formel verwendet, die hier exemplarisch für die Trockenbruchlast dargestellt ist:

$$\text{Relative Zunahme der Trockenbruchlast} = \Delta\,\text{TBL} = \frac{\left(NTBL_{\text{Prüfprobe}} - NTBL_{\text{Nullprobe}}\right)}{NTBL_{\text{Nullprobe}}} \bullet 100 \quad [\%]$$

mit:

NTBL = normierte Trockenbruchlast in N
Nullprobe = Laborblatt ohne Trockenfestmittel
Prüfprobe = Laborblatt mit zu testendem Trockenfestmittel

Alle Messwerte der Trockenbruchlast und der Berstfestigkeit wurden auf ein Flächengewicht von 80 g/m² bezogen, wodurch aus der gemessenen Trockenbruchlast die normierte Trockenbruchlast errechnet wurde:

$$\text{Normierte Trockenbruchlast} = \text{NT BL} = \frac{(TBL \bullet FG)}{80}$$

mit:

TBL = Meßwert der Trockenbruchlast
FG = Flächengewicht des zugehörigen Laborblatts in g/m²

Zur Berechnung der normierten Berstfestigkeit bzw. der relativen Zunahme der Berstfestigkeit wurde analog verfahren.
Die Werte für die relative Zunahme der Trockenbruchlast ($\Delta$ TBL) bzw. die relative Zunahme der Berstfestigkeit ($\Delta$ BF) sind in Tabelle 2 zusammengestellt.

Tabelle 2:

| Beispiel | Zugabemenge (%) | Δ TBL (%) | Δ BF (%) |
|---|---|---|---|
| Festigkeitsparameter von Papieren, die mit Polymerlösungen aus den Beispielen 1-15 behandelt wurden | | | |
| 1 | 0,5 | 6,3 | 24,5 |
|  | 1,5 | 20,7 | 40,1 |
| 2 | 0,5 | 9,8 | 25,0 |
|  | 1,5 | 22,5 | 36,6 |
| 3 | 0,5 | 7,7 | 16,5 |
|  | 1,5 | 21,6 | 30,1 |
| 4 | 0,5 | 3,9 | 21,2 |
|  | 1,5 | 19,7 | 35,8 |
| 5 | 0,5 | 6,3 | 19,9 |
|  | 1,5 | 22,8 | 32,2 |
| 6 | 0,5 | 17,4 | 18,5 |
|  | 1,5 | 20,7 | 35,3 |
| 7 | 0,5 | 11,4 | 22,9 |
|  | 1,5 | 30,9 | 40,5 |
| 8 | 0,5 | 17,9 | 26,6 |
|  | 1,5 | 34,6 | 37,9 |
| 9 | 0,5 | 16,3 | 17,6 |
|  | 1,5 | 30,2 | 35,9 |
| 10 | 0,5 | 10,7 | 23,4 |
|  | 1,5 | 18,5 | 32,4 |
| 11 | 0,5 | 25,0 | 27,6 |
|  | 1,5 | 23,2 | 39,6 |
| 12 | 0,5 | 17,0 | 18,7 |
|  | 1,5 | 34,4 | 44,5 |
| 13 | 0,5 | 13,8 | 19,4 |
|  | 1,5 | 15,0 | 34,6 |
| 14 | 0,5 | 16,1 | 25,4 |
|  | 1,5 | 21,2 | 39,3 |
| 15 | 0,5 | -0,2 | 11,3 |
|  | 1,5 | 13,1 | 29,8 |

Sowohl der Einsatz eines Vernetzers (Beispiele 1-6) als auch die Verwendung des erfindungsgemäßen zweistufigen Verfahrens (Beispiele 7-14) führen bei gleichen Einsatzmengen zu höheren Festigkeitsparametern, verglichen mit den aus dem Stand der Technik bekannten Polymerlösungen (Beispiel 15).

Die folgenden Herstellungsbeispiele 16 - 20 zeigen weitere Herstellungs- bzw. Ausführungsmöglichkeiten der erfindungsgemäßen Polymere bzw. Verfahren. In allen Fällen wurden Polymerlösungen erhalten, die bei Masse- bzw. Oberflächenanwendungen ebenfalls in sehr guter Weise die Trockenfestigkeit von Papier steigerten.

**Beispiel 16**

Man verfährt wie in Beispiel 1, setzt jedoch abweichend die Stärke C (Trockengehalt 85,6 %) sowie Acrylsäure als weiteres Monomer im Zulauf 1 ein. Die verwendeten Mengen sind folgendermaßen:

| | |
|---|---|
| Stärke C | 48,5 g |

(fortgesetzt)

| demin. Wasser (vorgelegt) | 995 g |
|---|---|

Zulauf 1): Wässrige Lösung der Monomere bestehend aus:

74,7 g Acrylamid
23,35 g AETAC als 80 %ige wässrige Lösung
3,5 g Acrylsäure
3,0 g einer 1 %igen wässrigen Lösung von MBA
100,0 g demineralisiertes Wasser
10 %ige Natronlauge        22,0 g

Man erhält eine klare, homogene Polymerlösung mit einem pH-Wert von 5,3, einem Trockengehalt von 10,3 % und einer Viskosität von 2390 mPas.

## Beispiel 17

In einem 2 l-Planschliffkolben mit Mantelheizung und Rührer werden bei Raumtemperatur 1005 g demineralisiertes Wasser vorgelegt und darin 49,9 g der Stärke A (Trockengehalt 83,1 %) unter Rühren suspendiert. Die Apparatur wird dann unter Stickstoff gesetzt. Stickstoffatmosphäre und Rühren werden für den gesamten weiteren Reaktionsablauf beibehalten.
Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 2,0 g Eisessig und 0,65 g Natriumformaldehydsulfoxylat-Dihydrat zugesetzt. Danach werden gleichmäßig und parallel über 90 min bei 85°C die folgenden zwei Lösungen zudosiert:

Zulauf 1): Wässrige Lösung der Monomere bestehend aus:

78,2 g Acrylamid
23,35 g Diallyldimethylammoniumchlorid als 80 %ige wässrige Lösung
3,0 g einer 1 %igen wässrigen Lösung von MBA
100,0 g demineralisiertes Wasser

Zulauf 2): Wässrige Lösung des Initiators, bestehend aus:

96,9 g einer 2 %igen wässrigen Lösung von Ammoniumperoxodisulfat

Nach Beendigung der Dosierungen wird für 45 min bei 85°C nachgerührt, dann werden zur Nachaktivierung 15,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.
Der pH-Wert wird mit ca. 14 g 10 %iger Natronlauge auf 7,1 gestellt, weiterhin werden 1,4 g des Biozids PREVENTOL® D 2 (Bayer AG) zugesetzt. Schließlich wird die Polymerlösung durch ein 100 µ-Polyamid-Filtertuch filtriert.
Man erhält eine klare, homogene Polymerlösung mit einem Trockengehalt von 10,0 % und einer Viskosität von 10 mPas.

## Beispiel 18

Man verfährt analog zu Beispiel 1, setzt jedoch als Vernetzer im Zulauf 1 Ethylenglykoldimethacrylat anstelle von MBA ein. Abweichend von Beispiel 1 werden die folgenden Mengen eingesetzt:

| Stärke A (Trockengehalt 83,1 %) | 49,9 g |
|---|---|
| demin. Wasser (vorgelegt) | 995 g |
| 1 %ige wässrige Emulsion von Ethylenglykoldimethacrylat (durch Zusatz von 0,1% Na-dodecylsulfat emulgiert) | 15,0 g |

Man erhält eine klare, homogene Polymerlösung mit einem pH-Wert von 7,1, einem Trockengehalt von 10,2 % und einer Viskosität von 120 mPas.

### Beispiel 19

Man verfährt analog zu Beispiel 7, wählt jedoch eine andere Zusammensetzung des Polymers. Im einzelnen werden abweichend von Beispiel 7 folgende Mengen eingesetzt:

| Zulauf 2: | |
| --- | --- |
| Acrylamid | 73,4 g |
| Acrylsäure | 4,8 g |
| demin. Wasser | 80,0 g |
| 10 %ige NaOH | ca. 30 g |

Man erhält eine klare, homogene Polymerlösung mit einem pH-Wert von 7,0, einem Trockengehalt von 9,8 % und einer Viskosität von 25 mPas.

### Beispiel 20

In einem 21-Planschliffkolben mit Mantelheizung und Rührer werden bei Raumtemperatur 1022 g demineralisiertes Wasser vorgelegt und darin 49,9 g der Stärke A (Trockengehalt 83,1 %) unter Rühren suspendiert. Die Apparatur wird dann unter Stickstoff gesetzt. Stickstoffatmosphäre und Rühren werden für den gesamten weiteren Reaktionsablauf beibehalten.

Die Stärkesuspension wird auf 85°C aufgeheizt, wobei die Stärke verkleistert und sich eine schwach trübe Lösung bildet. Nach Erreichen der 85°C wird für 15 min nachgerührt, dann werden 0,5 g Eisessig, 0,15 g Rongalit® C (Natriumformaldehydsulfoxylat-Dihydrat) und 25,6 g einer 65 %igen wässrigen Lösung von Diallyldimethylammoniumchlorid zugesetzt. Zur Initiierung der 1. Polymerisationsstufe wird gleichmäßig über 30 min bei 85°C die folgende Lösung zudosiert:

Zulauf 1): Wässrige Initiatorlösung bestehend aus:

24,2 g einer 2 %igen Lösung von Ammoniumperoxodisulfat

Nach Vervollständigung von Zulauf 1 wird die 2. Polymerisationsstufe durchgeführt. Dazu werden gleichmäßig über 90 min bei 85°C die folgenden Lösungen zudosiert:

Zulauf 2): Wässrige Acrylamidlösung bestehend aus:

80,3 g Acrylamid
85,0 g demineralisiertes Wasser

Zulauf 3): Wässrige Initiatorlösung bestehend aus:

72,7 g einer 2 %igen Lösung von Ammoniumperoxodisulfat

Nach Beendigung der Dosierungen wird für 45 min bei 85°C nachgerührt, dann werden zur Nachaktivierung 15,0 g einer 2 %igen wässrigen Lösung von Ammoniumperoxodisulfat zugegeben. Man rührt nochmals für 45 min bei 85°C nach, dann wird die Polymerlösung auf Raumtemperatur abgekühlt.

Der pH-Wert wird mit ca. 6 g 10 %iger Natronlauge auf 7,0 gestellt, weiterhin werden 1,4 g des Biozids PREVENTOL® D 2 (Bayer AG) zugesetzt. Schließlich wird die Polymerlösung durch ein 100 μ-Polyamid-Filtertuch filtriert.

Man erhält eine klare, homogene Polymerlösung mit einem pH-Wert von 7,0, einem Trockengehalt von 10,0 % und einer Viskosität von 10 mPas.

**Patentansprüche**

1. Kationisches Stärkepfropfpolymer aufgebaut aus den Monomeren a) bis d)

   a) 20 - 80 Gew.-% Acrylamid, Methacrylamid oder Mischungen davon,
   b) 3-20 Gew.-% wenigstens eines basischen oder kationischen Vinylmonomers,
   c) 0,005 -1,5 Gew.-% wenigstens eines bi- oder höherfunktionellen Vernetzers,
   d) 0-10 Gew.-% wenigstens eines nichtionischen oder anionischen Vinylmonomers, das sich von den unter
   a) bis c) aufgeführten Monomeren unterscheidet
   und einer Pfropfgrundlage e)
   e) 15 -70 Gew.-% wenigstens einer Stärke oder eines Stärkederivats,

   wobei die Summe aus a) bis e) 100 Gew.-% beträgt.

2. Kationisches Stärkepfropfpolymer gemäß Anspruch 1, **dadurch gekennzeichnet, dass** als Komponente a) Acrylamid eingesetzt wird.

3. Kationisches Stärkepfropfpolymer gemäß Anspruch 1, **dadurch gekennzeichnet, dass** als Komponente b) eine Vinylverbindung mit einer radikalisch polymerisierbaren Doppelbindung eingesetzt wird, die entweder eine permanent kationische Ladung oder eine basische Gruppe enthält, die unter schwach sauren Bedingungen vollständig oder teilweise protoniert vorliegt.

4. Kationisches Stärkepfropfpolymer gemäß Anspruch 1, **dadurch gekennzeichnet, dass** als Monomer c) eine wasserlösliche (d. h. > 3 g/l bei 23°C) Divinylverbindung eingesetzt wird.

5. Kationisches Stärkepfropfpolymer gemäß Anspruch 1, **dadurch gekennzeichnet, dass** als Pfropfgrundlage e) Stärke eingesetzt wird, die in ihrem Molekulargewicht durch teilweisen Abbau reduziert und/oder derivatisiert ist.

6. Verfahren zur Herstellung des kationischen Stärkepfropfpolymers gemäß Anspruch 1, **dadurch gekennzeichnet, dass** man die Komponenten a) bis e) in Wasser in Gegenwart von radikalischen Initiatoren radikalisch polymerisiert.

7. Verfahren zur Herstellung eines kationischen Stärkepfropfpolymers, **dadurch gekennzeichnet, dass** man die Monomeren a) bis d)

   a) 20 - 80 Gew.-% Acrylamid, Methacrylamid oder Mischungen daraus
   b) 3 - 20 Gew.-% mindestens eines basischen oder kationischen Vinylmonomers
   c) 0 - 1,5 Gew.-% mindestens eines bi- oder höherfunktionellen Vernetzers
   d) 0 - 10 Gew.-% mindestens eines nichtionischen oder anionischen Vinylmonomers, das sich von den unter
   a) bis c) aufgeführten Monomeren unterscheidet
   in Gegenwart von
   e) 15 - 70 Gew.-% mindestens einer Stärke oder eines Stärkederivats

   radikalisch polymerisiert, **dadurch gekennzeichnet, dass** in einem ersten Schritt als Pfropfgrundlage die Komponente e) in Wasser mit wenigstens 30 Gew.-% der Gesamtmenge der Komponente b) radikalisch polymerisiert wird und anschließend in einem zweiten Schritt die übrigen Komponenten a), c), d) und die Restmenge von b) radikalisch in Gegenwart der im ersten Schritt entstandenen Reaktionsmischung polymerisiert werden, und die Summe aus a) bis e) 100 Gew.-% ergibt.

8. Kationisches Stärkepfropfpolymer erhältlich nach dem Verfahren gemäß Anspruch 7.

9. Verwendung von kationischem Stärkepfropfpolymer gemäß Anspruch 1 oder 8 als Trockenverfestigungsmittel für Papier.

10. Verfahren zur Trockenverfestigung von Papier, **dadurch gekennzeichnet, dass** man Verbindungen gemäß Anspruch 1 und/oder 8 der Papierstoffsuspensionen vor der Blattbildung zugibt oder sie auf die Oberfläche der Papierbahn aufträgt.

**11.** Papier ausgerüstet mit einem Trockenverfestigungsmittel gemäß Anspruch 1 und/oder 8.